# EUROPEAN PATENT APPLICATION

(11) **EP 2 487 567 A2**
(43) Date of publication of application: **15.08.2012**
(21) Application number: 12154761.6
(22) Date of filing: 09.02.2012
(51) Int. Cl.: G06F 3/044

(54) **Capacitive touch screen panel display**

(30) Priority: 11.02.2011 KR 20110012376
(71) Applicant: Samsung Electronics Co., Ltd, Gyeonggi-do (KR)
(72) Inventor: Park, Seung Jun, Gyeonggi-do (KR); Won, Seung-Jae, Gyeonggi-do (KR); Nam, Kyung Han, Gyeonggi-do (KR); Baek, Il Seob, Gyeonggi-do (KR)
(74) Representative: Jenkins, Richard Gavin

(57) **Abstract**

A capacitive touch screen panel display, in which a touch sensor pattern may be prevented from being damaged during an ElectroStatic Discharge (ESD) test, is provided. The capacitive touch screen panel display includes a plurality of trace lines for transmitting touch signals from touch sensor patterns to a touch screen flexible printed circuit board, and a first length extension unit formed on a shortest trace line among the plurality of trace lines to extend a trace line length. Thus, touch sensor patterns may be prevented from being broken during the ESD test.

## Description

### BACKGROUND OF THE INVENTION

### 1. Field of the Invention:

The present invention relates to a capacitive touch screen panel display. More particularly, the present invention relates to a capacitive touch screen panel display in which a touch sensor pattern may be prevented from being damaged during an ElectroStatic Discharge (ESD) test.

### 2. Description of the Related Art:

Recently, in order to reduce the weight and thickness of a mobile terminal and to widen an area of a display thereof, a touch screen panel display has been developed for use in the mobile terminal. With increased demand of the touch screen panel display, touch screen technology is applied to a resistive touch screen panel or a capacitive touch screen panel having high durability, high precision touch, and high optical characteristics.

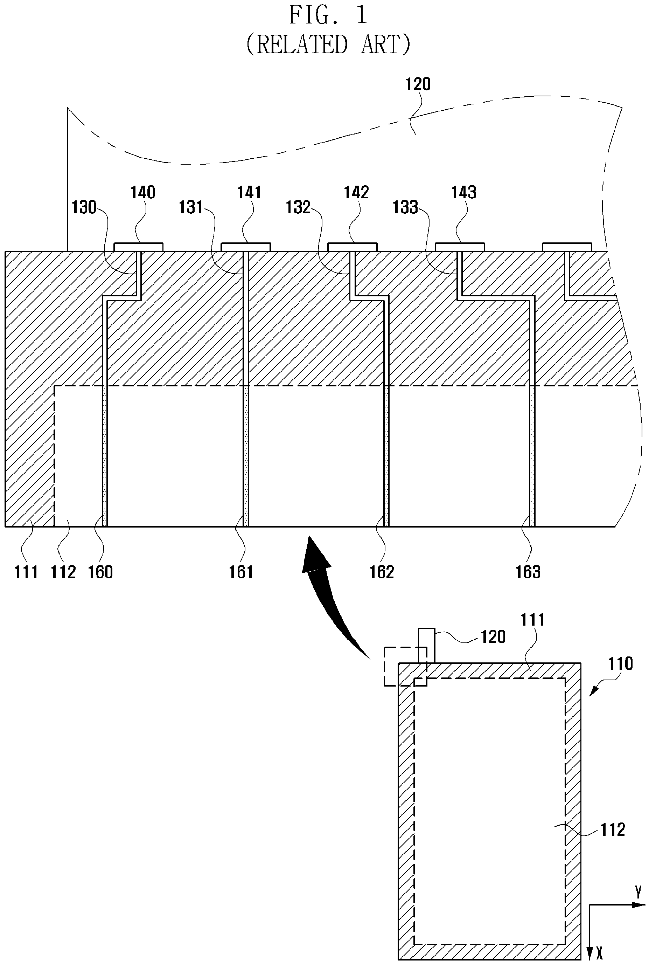

FIG. 1 is a sectional view illustrating a trace line of a touch screen panel display according to the related art. For reference, the lower side of FIG. 1 is a rear side view of a window glass 110 of the existing capacitive touch screen panel display (not illustrated) and the upper side thereof is an enlarged view of a part adjacent to a touch screen Flexible Printed Circuit Board (FPCB) 120.

Referring to FIG. 1, trace lines 130, 131, 132, and 133 are formed in a black mark area (where an image is not displayed to a user) 111 outside a display region (where an image is displayed for a user) 112. Ends of the trace lines 130, 131, 132, and 133 are connected to touch sensor patterns 160, 161, 162, and 163 of the display region 112, respectively and the other ends are connected to contacts 140, 141, 142, and 143 of the touch screen FPCB 120, respectively.

The capacitive touch screen panel, like the existing capacitive touch screen panel display, undergoes an ElectroStatic Discharge (ESD) test to determine whether the capacitive touch screen panel display may endure a preset level of static electricity. However, since a length of a Y1 trace line 131 (a length along a path of a trace line), as illustrated in FIG. 1, is the shortest length, the Y1 trace line 131 has the lowest resistance of 12Ω. Thus, when ESD is applied to the touch screen panel display, ESD is concentrated to the Y1 trace line via the touch screen FPCB 220 and the touch sensor patterns connected to the Y1 trace line are broken.

### SUMMARY OF THE INVENTION

Aspects of the present invention are to address at least the above-mentioned problem and/or disadvantages and to provide at least the advantages described below. Accordingly, an aspect of the present invention is to provide a capacitive touch screen panel display in which touch sensor patterns are prevented from being damaged during an ElectroStatic Discharge (ESD) test.

In accordance with an aspect of the present invention, a capacitive touch screen panel display is provided. The capacitive touch screen panel display includes a plurality of trace lines for transmitting touch signals from touch sensor patterns to a touch screen flexible printed circuit board, and a first length extension unit formed on the shortest trace line among the plurality of trace lines to extend a trace line length.

In accordance with another aspect of the present invention, a capacitive touch screen panel display is provided. The capacitive touch screen panel display includes a plurality of touch sensor patterns for detecting a touch on the capacitive touch screen panel display; a plurality of trace lines respectively connected on one end to the plurality of touch sensor patterns for transmitting touch signals; and a plurality of length extension units respectively formed on the plurality of trace lines.

According to the touch screen panel display, a length extension unit for extending a length of a trace line is formed on the shortest trace line so that touch sensor patterns may be prevented from being damaged during the ESD test.

Moreover, resistance of the trace line on which the length extension unit is formed is equal to the resistance of an adjacent trace line so that it may prevent ESD from being concentrated on a single trace line.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiment of the present invention will be more apparent from the following description taken in conjunction with the accompanying drawings, in which:

FIG. 1 is a view illustrating a trace line of a capacitive touch screen panel display according to the related art;

FIG. 2 is a view illustrating a trace line of a capacitive touch screen panel display according to an exemplary embodiment of the present invention; and

FIG. 3 is a schematic sectional view taken along a cutting line A-A' of FIG. 2 according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

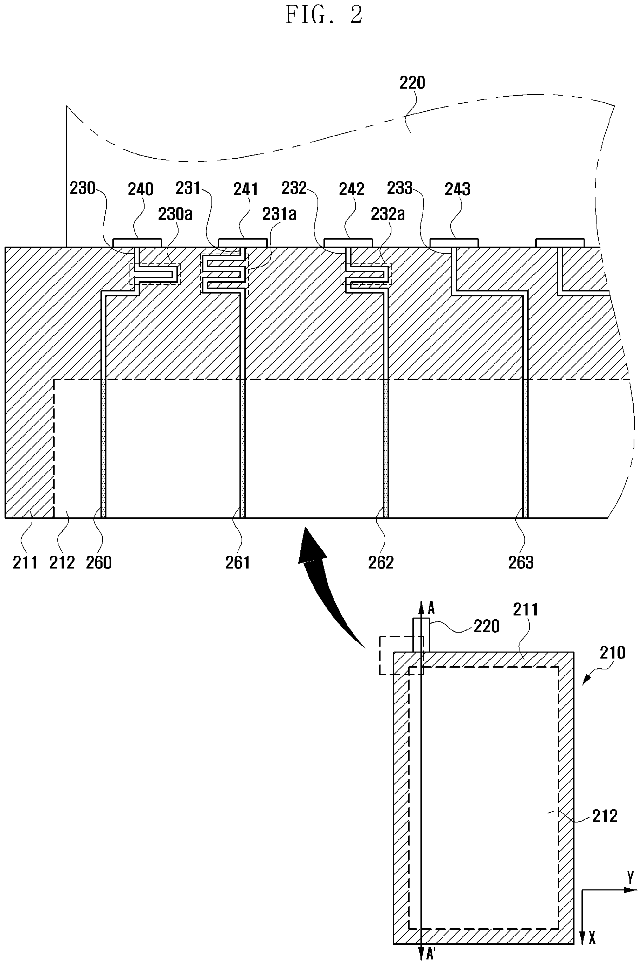

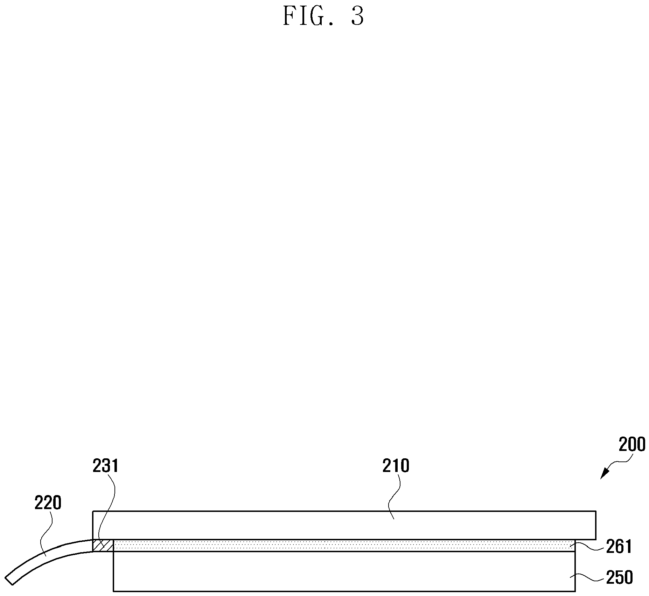

FIG. 2 is a view illustrating a trace line of a capacitive touch screen panel display according to an exemplary embodiment of the present invention. FIG. 3 is a schematic sectional view taken along a cutting line A-A' of FIG. 2 according to an exemplary embodiment of the present invention. For reference, FIG. 2 shows only Y-axis trace lines 230, 231, 232, and 233 and X-axis trace lines are omitted for illustrative purpose.

A capacitive touch screen panel display 200 according to an exemplary embodiment of the present invention will be described with reference to FIGs. 2 and 3 as follows.

Referring to FIGs. 2 and 3, the capacitive touch screen panel display 200 includes a display 250, a window glass 210, touch sensor patterns 260, 261, 262, and 263, and trace lines 230, 231, 232, and 233.

The display 250 displays an image to a user and may be a Liquid Crystal Display (LCD) or an Active Matrix Organic Light Emitting Diode (AMOLED).

The window glass 210 protects the display 250 from external shock, transmits the image of the display 250 toward a user, and is disposed on the display 250.

The touch sensor patterns 260, 261, 262, and 263, detect a touch by a user and may be made of Indium Tin Oxide (ITO). In an exemplary implementation, the touch sensor patterns 260, 261, 262, and 263 are formed in a display area 212 on the rear side of the window glass 210. However, the present invention is not limited thereto. For example, the touch sensor patterns 260, 261, 262, and 263 may be formed on an upper side of an encap glass for forming AMOLED like an on-cell Touch Screen Panel (TSP) AMOLED.

The trace lines 230, 231, 232, and 233 transmit touch signals from the touch sensor patterns 260, 261, 262, and 263 to a touch screen Flexible Printed Circuit Board (FPCB) 220. In an exemplary implementation, the trace lines 230, 231, 232, and 233 are formed in a black mark area 211 on the rear side of the window glass 210. However, the present invention is not limited thereto. For example, the trace lines 230, 231, 232, and 233 may be formed on the encap glass for forming AMOLED like the on-cell TSP AMOLED. Respective ends of the trace lines 230, 231, 232, and 233 are connected to the touch sensor patterns 260, 261, 262, and 263 of the display area 212 and the other ends thereof are connected to contacts 240, 241, 242, and 243 of the touch screen FPCB 220.

In an exemplary implementation, a length extension unit 231a extending a trace line length is formed on the shortest Y1 trace line 231. In addition, length extension units 230a and 232a extending a trace line length are formed on a Y0 trace line 230 and a Y2 trace line 232 which are adjacent to the Y1 trace line 231. By doing so, respective resistances of the Y0 trace line 230, the Y1 trace line 231, and the Y2 trace line 232 are increased. The length extension units 230a, 231a, and 232a have a meander line shape, as illustrated in FIG. 2.

Table 1 lists the resistance before and after length extension units of the trace lines 230, 231, 232, and 233 are formed. For reference, the Y3 trace line 233, as illustrated in FIG. 2, does not have a length extension unit.

**Table 1**

| No. of trace line | Y0 | Y1 | Y2 | Y3 |
|---|---|---|---|---|
| Before forming extension unit | 237.8756Ω | 12.07253Ω | 226.8478Ω | 452.6509Ω |
| After forming length extension unit | 452.6367Ω | 452.6336Ω | 452.6478Ω | 452.6509Ω |

According to an exemplary embodiment of the present invention, resistance of the Y1 trace line 231 is increased when the length extension unit 231a is formed on the shortest Y1 trace line 231. Thus, less current, than before the length extension unit is formed, flows through the Y1 trace line 231 when a high voltage ESD is applied thereto. Therefore, the touch sensor pattern 261 connected to the Y1 trace line 231 may be prevented from being broken.

For reference, in an exemplary implementation, since the touch screen FPCB 220 is formed along the X-axis, the shortest trace line belongs to a Y-axis trace line. Thus, in a case when the touch screen FPCB 220 is formed in the Y-axis direction, a trace line belonging to the X-axis trace line may have a length extension line.

Moreover, according to an exemplary embodiment of the present invention , resistance of the Y1 trace line 231 (approximately 452.6Ω) is the same as the resistance of the Y0 trace line 230 and Y2 trace line 232 which are adjacent to the Y1 trace line 231. Thus, when a high voltage ESD is applied, the ESD is uniformly distributed to the Y0 trace line 230, the Y1 trace line 231, and the Y2 trace line 232 and not concentrated to any one of the trace lines 230, 231, and 232. As a result, the touch sensor patterns are prevented from being broken.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A capacitive touch screen panel display comprising:
a plurality of trace lines for transmitting touch signals from touch sensor patterns to a touch screen flexible printed circuit board; and
a first length extension unit formed on a shortest trace line among the plurality of trace lines to extend a trace line length.

2. The capacitive touch screen panel display of claim 1, wherein the total resistance of the shortest trace line and the first length extension unit is substantially the same as the resistance of an adjacent trace line.

3. The capacitive touch screen panel display of claim 2, wherein at least one second length extension unit is formed on at least one adjacent trace line, respectively.

4. The capacitive touch screen panel display of claim 3, wherein the at least one second length extending unit formed on the at least one adjacent trace line comprises a meander line shape.

5. The capacitive touch screen panel display of claim 1, wherein the first length extending unit formed on the shortest trace lines comprises a meander line shape.

6. A capacitive touch screen panel display comprising:
a plurality of touch sensor patterns for detecting a touch on the capacitive touch screen panel display;
a plurality of trace lines respectively connected on one end to the plurality of touch sensor patterns for transmitting touch signals; and
a plurality of length extension units respectively formed on the plurality of trace lines.

7. The capacitive touch screen panel display of claim 6, wherein each of the plurality of length extension units extends the respective plurality of trace lines to have substantially the same total length.

8. The capacitive touch screen panel display of claim 7, wherein each of the plurality of length extension units comprises a meander line shape.

9. The capacitive touch screen panel display of claim 6, wherein the total resistance of each of the plurality of trace lines and respective length extension units is substantially the same.

10. The capacitive touch screen panel display of claim 9, wherein each of the plurality of trace lines is connected on another end to a plurality of contacts of a touch screen flexible printed circuit board.
